# EUROPEAN PATENT SPECIFICATION

(11) **EP 0 449 789 B1**
(45) Date of publication and mention of the grant of the patent: **22.06.1994**
(21) Application number: 91830112.8
(22) Date of filing: 22.03.1991
(51) Int. Cl.: B62D 13/02, B62D 13/06

(54) **Self-steering axle for lorries, trailers, semitrailers and the like**
Selbstlenkende Achse für Lastwagen, Anhänger und Sattelanhänger und dergleichen
Essieu auto-directeur pour camions, remorques, semi-remorques etc.

(30) Priority: 30.03.1990 IT 514590
(43) Date of publication of application: 02.10.1991
(73) Proprietor: Bertozzi Sansavini, Fabrizio, I-25039 Travagliato (Brescia) (IT); Bertozzi Sansavini, Danilo, I-25039 Travagliato (Brescia) (IT)
(72) Inventor: Bertozzi Sansavini, Fabrizio, I-25039 Travagliato (Brescia) (IT); Bertozzi Sansavini, Danilo, I-25039 Travagliato (Brescia) (IT)
(74) Representative: Manzoni, Alessandro

(56) References cited:
- DE-A- 3 708 988

## Description

The presente invention relates to a self-steering axle for lorries, trailers, semitrailers and the like, which is able to steer both when the vehicle is moving forward or reversing.

The self-steering axles for the above mentioned vehicles usually allow for the steering of the wheels during a forward motion whilst being unsuitable for steering the wheels when reversing. Such a serious limitation evidently reduces the possibilities of an easy and convenient manoeuvering of the vehicle.

In DE-A-3 708 988 a self-steering axle has been disclosed in order to eliminate the above mentioned inconveniences. That self-steering axle corresponds to the preamble of claim 1 and comprises an axle having its ends articulated to the spindles of a pair of wheels with variable orientation and one or two steering rods placed parallel to the sides of said axle and having the ends eccentrically articulated to the two wheels. But, it needs of a longitudinallu slidable tube to be fitted on the axle of pair of wheels and the vehicle chassis is supported by said slidable tube. The movements of the chassis when the vehicle is being steered cause the slidable tube to slide on the axle and the steering of said wheels through the use of a transmission rod attached to said tube. Such a construction permits the steering of the wheels during both a forward and reverse motion of the wehicle, but requires a slidable tube on the axle and relatively complex locking, releasing and transmission members for the movements of the wheels to be steered.

The object of the present invention is to provide a new solution to the problem concerning the self-steering axles, that is a solution which allows for the steering of the wheels both when the vehicle is moving forward or reversing and at the same time eliminates the need for a slidable tube as used in the above mentioned known realizations, therefore notably simplifying the construction and improving reliability.

The here proposed solution is appliable to a steering axle placed at the back or even in the centre of the wehicle, as well as to vehicles with leaf springs and pneumatic suspensions. Said solutions also reduce friction seeing that the sliding of parts on top of each other is eliminated, eliminates vibration seeing that the axle remains rigid when the veichle is moving in a straight line and therefore makes driving the vehicle fitted with such a self-steering axle easier.

In accordance with the present invention, the self-steering axle is characterized in that it comprises two parts which can rotatably oscillate in a vertical plane on respective oscillating shafts which are mounted on said axle parallel to and symmetrical with respect to the longitudinal axis of the vehicle, the vehicle chassis being supported by said two parts at points which are positioned vertically relative to the shafts, and action/reaction means which connect the oscillating parts to said steering rod or rods in such a way that the transversal movements of the chassis relatively to the axle, when the vehicle is being steered, cause the oscillations of said oscillating parts and the application of corresponding steering forces to said wheels.

Further details of the invention will seem clearer following the description with references being made to the attached drawing in which:
- Fig. 1: is a plan view of the self-steering axle for vehicles with leaf spring suspensions;
- Fig. 2: is a side elevation view of the self-steering axle of Fig. 1;
- Fig. 3: is a section view of the self-steering axle on the lines III-III in Fig. 2; and
- Fig. 4: is a partial schematic view of a self-steering axle to be fitted on vehicles with pneumatic suspensions.

Said drawing illustrates an axle (10) with ends which are articulated in a known way to a pair of wheels (11) with variable orientation through the use of spindles (10′).

The axle (10) can have either a square, rectangular, polygonal, round, etc. cross-section and any type of longitudinal configuration.

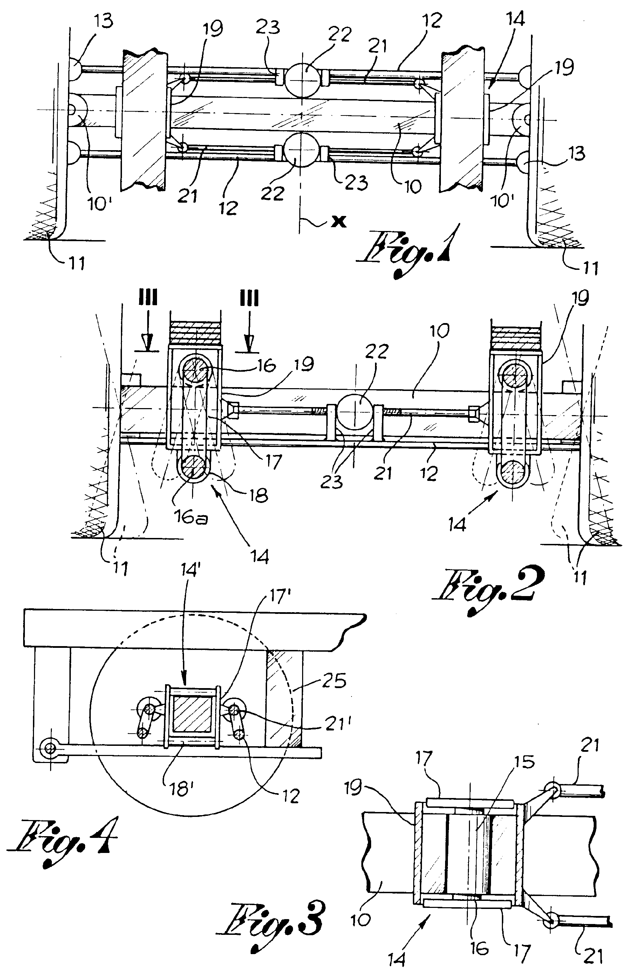

In the embodiment shown in Figs. 1 to 3, two transmission rods (12) which are parallel to the actual axle (10) and having their ends (13) articulated to the wheelcarriers are provided on the opposite sides of the axle (10).

Two oscillating parts (14) placed symetrically with respect to the centre part of the axle and therefore with respect to the longitudinal axis of the vehicle which is shown with an (X) in Fig. 1 are fitted on the axle (10). The parts (14) oscillate in a verticle plane at a right-angle to the axle and with an oscillating axle substantially parallel to the longitudinal axis of the vehicle.

Each oscillating part (14) comprises a support sleeve (15) fixed on the axle (10) parallel to the above mentioned axis (X) of the vehicle, an oscillating shaft (16) which is rotatingly inserted in said sleeve and holding two plates (17) on its ends which vertically extend from opposite sides of the axle, a connecting shaft (16a) which joins said plates (17) to each other below the axle (10) and which is fitted in a movable sleeve (18), that is to say separate from the axle.

A casing (19) which extends upwards above the axle, without coming into contact with it, and which supports the vehicle chassis (not shown) through leaf-springs (20) or other suitable resting parts is fixed to the movable sleeve (18) of each oscillatting part (14).

The two casings (19) which correspond to the two oscillating parts (14) are connected to each other by two synchronizing rods (21). A pneumatic or other type of actuator (22) which can either be preloaded or loadable is inserted in the centre of each synchronized rod (21).

Finally, the synchronized rods (21) or the actuators (22) which are associated to them are constrained to the corresponding transmission rods (12) through arms (23).

Only the oscillating parts (14) are maintained in a varied construction of the fitting of a self-steering axle to vehicles with a pneumatic suspension chassis (25) as in Fig. 4. The casings (19) can in this case be eliminated as they are unneccessary. The oscillating parts (14′) therefore have the same structure of those described above (Figs. 1 to 3) with the only difference that the movable sleeve (18′) of each part is fixed to the leaf spring (26) of the vehicle chassis and that the synchronizing rods (21′) with actuators (22′) are fixed to and connect the oscillating plates (17′) of said parts.

In both types of realizations, the wheels remain parallel to the direction in which the vehicle is moving, the self-steering part remains inoperable and the actuators (22) help to keep these conditions when the vehicle is moving in a straight direction.

When, on the other hand, the vehicle is manoeuvering, the consequent movements of its chassis determine the movement of the rods (21) due to the oscillating parts (14) with or without the casings (19). These movements are equally transmitted to the transmission rods (12) and therefore to the wheels. In accordance to the movements carried out by the drive-wheels, the oscillating parts (14) oscillate in one or the other direction (Fig. 2) depending on the movements of the chassis, therefore always causing a co-ordinated steering of the wheels both in a forward and reversing motion. Then, as soon as the vehicle returns to move in a straight line, the wheels straighten on the direction of the drive wheels and all the parts return to a neutral position, that is to say inoperable and in cooperation with the interagent actuators with the straight-line motion of the rods.

## Claims

1. A self-steering axle for both forward and reversing motions of lorries, trailers, semitrailers and the like, comprising an axle (10) having its ends articulated to the spindles of a pair of wheels with variable orientation and one or two steering rods (12) placed parallel to the sides of said axle and having the ends eccentrically articulated to the two wheels, characterized in that it comprises two parts (14; 14′) which can rotatably oscillate in a vertical plane on respective oscillating shafts (16) which are mounted on said axle (10) parallel to and symmetrical with respect to the longitudinal axis of the vehicle, the vehicle chassis being supported by said two parts (14;14′) at points which are positioned vertically relative to the shafts (16), and action/reaction means (21,22; 21′, 22′) which connect the oscillating parts (14; 14′) to said steering rod or rods (12) in such a way that the transversal movements of the chassis relatively to the axle, when the vehicle is being steered, cause the oscillations of said oscillating parts and the application of corresponding steering forces to said wheels.

2. Self-steering axle as claimed in claim 1, characterized in that the oscillating parts (14;14′) support the chassis through two casings (19) which are fixed to and oscillate with said oscillating parts, the action/reaction means (21,22) connecting the oscillating casings (19) to said stearing rod or rods (12).

3. Self-steering axle as claimed in claims 1 and 2 characterized in that each oscillating part (14,14′) has an oscillating shaft (16) which rotates in a support sleeve (15) stationarily applied to the axle, and two plates (17,17′) fixed to ends of said oscillating shaft (16) and connected to each other at a different location by a connecting shaft (16a) which passes through a movable sleeve (18,18′).

4. Self-steering axle as claimed in claim 1-3, characterized in that said movable sleeve (18) of each oscillating part (14) is fixed to the casing (19) which supports the vehicle chassis, said oscillating casing being connected to said chassis by leaf springs or suspension, said action/reaction means being connected to said casings.

5. Self-steering axle as claimed in claims 2 and 3, characterized in that the movable sleeve (18′) of each oscillating part (14′) is fixed to a leaf spring or suspension of the vehicle chassis, the action/reaction means being connected to the plates of said oscillating parts.

6. Self-steering axle as claimed in claim 1 or 2, characterized in that the action/reaction means comprise at least one rod (21, 21′) which is fixed to the oscillating parts or casings and is equipped with a central actuator, and in that said rod (21,21′) is connected to a corresponding steering rod (12).

## Patentansprüche

1. Selbstlenkende Achse sowohl für das Vorwärts- als auch für das Rückwärtsfahren für Lastkraftwagen, Anhänger, Sattelanhänger u.dgl., die eine Achse (10) enthält, deren beiden Enden mit den Zapfen eines Paares von Rädern mit veränderlicher Orientierung gelenkig verbunden sind, wobei parallel zu den Seiten der Achse eine oder zwei Steuerstangen (12) angeordnet sind, deren Enden exzentrisch an den beiden Rändern angelenkt sind, dadurch gekennzeichnet, daß die selbststeuernde Achse zwei Schwingglieder (14, 14′) enthält, die in einer senkrechten Ebene an entsprechenden Schwingwellen (16) schwingen können, die an der Achse (10) parallel und in symmetrischer Anordnung mit Bezug auf die Längsachse des Fahrzeugs angeordnet sind, wobei der Rahmen des Fahrzeugs von den beiden Schwinggliedern (14, 14′) an Stellen unterstützt wird, die gegenüber den Schwingwellen (16) in senkrechter Anordnung vorgesehen sind, und daß Aktions- und Reaktionsglieder (21, 22; 21′, 22′) vorgesehen sind, welche die Schwingglieder (14, 14′) mit der/den Steuerstange/n (12) in solcher Art verbinden, daß dann, wenn das Fahrzeug gesteuert wird, die gegenüber der Achse transversalen Bewegungen des Rahmens die Schwingungen oder Oszillationen der Schwingglieder verursachen und das Ausüben entsprechender Steuerungskräfte auf die Räder bewirken.

2. Selbstlenkende Achse nach Anspruch 1, dadurch gekennzeichnet, daß die Schwingglieder (14, 14′) den Rahmen des Fahrzeugs unter Vermittlung von zwei Gehäusekästen (19) unterstützen, die an den Schwinggliedern (14, 14′) befestigt sind und mit diesen schwingen, und daß die Aktions- und Reaktionsglieder (21, 22) die schwingenden Gehäusekästen (19) mit der/den Steuerstange/n (12) verbinden.

3. Selbstlenkende Achse nach Anspruch 1 und 2, dadurch gekennzeichnet, daß jedes Schwingglied (14, 14′) eine in einer ortsfest an der Achse angebrachten Trägerhülse rotierende Schwingwelle (16) und zwei an den Enden der Schwingwelle (16) angebrachte Platten (17, 17′) besitzt, die in einem anderen Bereich durch eine Verbindungswelle (16a) miteinander verbunden sind, die durch eine bewegliche Hülse (18, 18′) hindurchgeht.

4. Selbstlenkende Achse nach einem der Ansprüche 1 bis 3, dadurch gekennzeichnet, daß die bewegliche Hülse (18) jedes Schwinghebels (14) an dem den Rahmen des Fahrzeugs unterstützenden Gehäusekasten (19) angebracht ist, daß der schwingende Gehäusekasten (19) mit dem Rahmen des Fahrzeugs über eine Blattfeder oder eine Aufhängung bzw. Verspannung verbunden ist und daß die Aktions- und Reaktionsglieder (21, 22; 21′, 22′) mit den Gehäusekästen (19) verbunden sind.

5. Selbstlenkende Achse nach Anspruch 2 und 3, dadurch gekennzeichnet, daß die bewegliche Hülse (18′) jedes Schwinghebels (14′) mit dem Rahmen des Fahrzeugs über eine Blattfeder oder eine Aufhängung oder Verspannung verbunden ist und daß die Aktions- und Reaktionsglieder (21′, 22′) mit den Platten der Schwingglieder verbunden sind.

6. Selbstlenkende Achse nach Anspruch 1 oder 2, dadurch gekennzeichnet, daß die Aktions- und Reaktionsglieder (21, 22; 21′, 22′) mindestens eine an den Schwinggliedern oder den Gehäusekästen befestigte und mit einem zentralen Betätigungsglied versehene Stange (21, 21′) besitzen, welche Stange (21, 21′) mit einer entsprechenden Steuerstange (12) verbunden ist.

## Revendications

1. Essieu de braquage automatique pour marche avant et marche arrière pour camions, remorques, semiremorques et véhicules similaires, comprenant un essieu (10) dont les extrémités sont articulées aux pivots d'une paire de roues à orientation variable et une ou deux barres de renvoi (12), placées parallèlement aux côtés de l'essieu, et dont les extrémités sont articulées de manière excentrée par rapport aux deux roues, essieu caractérisé par le fait qu'il comprend deux éléments (14,14′) pouvant osciller avec un mouvement pendulaire dans un plan vertical par rapport aux arbres d'oscillation respectifs (16) montés sur l'essieu en parallèle et symétriquement par rapport à l'axe longitudinal du véhicule, le châssis du véhicule étant supporté par ces deux éléments (14,14′) dans des points positionnés verticalement par rapport aux arbres d'oscillation (16), et des dispositifs d'action/réaction (21,22; 21′,22′) qui relient les éléments oscillants (14,14′) à la barre ou barres de braquage (12) de telle sorte que les mouvements transversaux du châssis par rapport à l'essieu, lorsque le véhicule est en train de braquer, provoquent des oscillations desdits éléments oscillants et l'application de forces de braquage correspondantes aux roues.

2. Essieu de braquage automatique conforme à la revendication 1, caractérisé par le fait que les éléments oscillants (14,14′) supportent le châssis au moyen de deux armatures (19) fixées aux éléments oscillants avec lesquels elles oscillent, les dispositifs d'action/réaction (21,22) qui relient les armatures oscillantes (19) à la barre ou barres de braquage (12).

3. Essieu de braquage automatique conforme aux revendications 1 et 2, caractérisé par le fait que chaque élément oscillant (14,14′) a un arbre d'oscillation (16) en rotation dans un manchon de support (15) fixe appliqué sur l'essieu, et deux plaques (17,17′) fixées aux extrémités de l'arbre d'oscillation (16) et reliées entre elles dans une autre zone par un arbre de liaison (16a) passant dans un manchon mobile (18,18′).

4. Essieu de braquage automatique conforme aux revendications 1 à 3, caractérisé par le fait que le manchon mobile (18) de chaque élément oscillant (14) est fixé à l'armature (19) qui supporte le châssis du véhicule, ladite armature oscillante étant reliée audit châssis au moyen d'une barre de suspension ou suspension, les dispositifs d'action/réaction étant reliés à ces armatures.

5. Essieu de braquage automatique conforme aux revendications 2 et 3, caractérisé par le fait que le manchon mobile (18′) de chaque élément oscillant (14′) est fixé au châssis au moyen d'une barre de suspension ou suspension, les dispositifs d'action/réaction étant reliés à ces éléments oscillants.

6. Essieu de braquage automatique conforme à la revendication 1 ou 2, caractérisé par le fait que le dispositif d'action/réaction comporte au moins une branche (21,21′) fixée aux éléments oscillants ou aux armatures, et est équipé d'un actionneur intermédiaire, et par le fait que ladite branche (21,21′) est reliée à une barre de braquage (12) correspondante.
